# EUROPEAN PATENT SPECIFICATION

(11) **EP 3 379 923 B1**
(45) Date of publication and mention of the grant of the patent: **17.06.2020**
(21) Application number: 16802162.4
(22) Date of filing: 18.11.2016
(51) Int. Cl.: A01G 9/08, A01G 29/00

(54) **DEVICE FOR THE TREATMENT OF SUBSTRATE BODIES**
VORRICHTUNG ZUR BEHANDLUNG VON SUBSTRATKÖRPERN
DISPOSITIF POUR LE TRAITEMENT DES CORPS DE SUBSTRAT

(30) Priority: 23.11.2015 NL 1041584; 21.10.2016 NL 1042109
(43) Date of publication of application: 03.10.2018
(73) Proprietor: M. Stolze Holding B.V., 2678 ME De Lier (NL)
(72) Inventor: STOLZE, Martin, 2678 MD De Lier (NL)
(74) Representative: Ferguson, Alexander
(86) International application number: PCT/NL2016/000021
(87) International publication number: WO 2017/091062

(56) References cited:
- DE-U1-202014 006 565
- US-A1- 2004 049 979
- US-A1- 2011 162 267

## Description

### BACKGROUND OF THE INVENTION

Substrate bodies provided with a plant may be found in the form of plant pots, namely pots filled with a substrate forming a substrate body with pores and comprising a plant rooted in the substrate body. Plant pots can be found as item to be handled individually or as group held in a tray. Pore-containing substrate bodies provided with a plant, may also be found in the form of so-called pressed pots, pressed balls or cubes of substrate, in particular soil, in which a plant is rooted, without enveloping. They may be offered in groups or as item to be handled individually. They may furthermore be found in groups of balls/cubes present in accommodation spaces of trays, so-called sowing trays.

They are transported from nurseries to locations where they are sold, optionally after having been temporarily stored. The substrate may for instance be earthy, such as potting compost, comprise grains (such as clay grains) or fibres (such as bark fibres, peat fibres, coconut fibres, rock wool fibres) or have a more shape-retaining form, such as in the case of polyurethane foam. Growth substances may have been added. The substrate body may have been built up from different types of layers, such as a layer of PU foam and a layer of potting compost on top of that. The pots themselves have usually been made of synthetic material, such as polyethylene or polypropylene.

In order to preserve the quality of plants or small plants, the roots need to have sufficient water and nutrients at their disposal. This is commonly done by spraying the plants from above. A drawback of this is that some plant flowers, such as roses and orchids, may change colour in UV light. Another drawback of this is that mildew/fungus may develop on the leaves. Another drawback is that the environment becomes very humid, which may be problematic in terms of working conditions for the people working there. Another drawback is that the upper face of the substrate body is not sufficiently permeable to water or may become impermeable. All this results in uncertainty about the plant storage life.

In conditions for sales, the plants therefore cannot all be offered for sale for a sufficiently long period of time. The stock of plants offered for sale will need to be checked regularly for quality and plants that have gone bad will need to be removed. This is a loss and an expense. US2011/0162267A1, US2004/0049979A1 and DE202014006565U1 disclose methods and devices for administering nutrition to plant substrates for improved plant quality.

### SUMMARY OF THE INVENTION

It is an object of the invention to provide a device and a method that can be conducive to the storage life of substrate bodies provided with a plant intended for sale.

It is an object of the invention to provide a device and a method with which the storage life of substrate bodies provided with a plant intended for sale can be controlled to a large extent.

According to one aspect the invention provides a device for administering a fluid according to independent claim 1.

By urging the dose of fluid into the substrate body, all fluid is actually introduced into the substrate body, in a known quantity. Among a batch of similar plants or small plants, deviations in storage life will be highly limited. The surrounding area of the position station will hardly be affected during introducing the fluid.

Fluid here means a non-gaseous, non-granular pumpable material, in particular aqueous and/or water-absorbing and water-dispensing material, that is liquid (such as water) or sufficiently deformable in order to be pumped, such as a hydro gel.

The pressure means may comprise a fluid pump, such as a peristaltic pump, a membrane pump or plunger pump. A peristaltic pump among others has the advantage of a continuously variable operation which as a result is conducive to attuning the dose to be dispensed to various plants. A peristaltic pump can furthermore perform a kneading action on the fluid. A plunger pump can be advantageous if one type of plant is being treated with a fixed dose.

According to the invention, there are at least two fluid dispensers positioned on opposite sides of the position station. This improves the capacity. From the perspective of stability of the substrate body to be treated, this may furthermore be advantageous when that body can be handled individually, such as in case of a plant pot, during the treatment. This may furthermore be advantageous for the spreading of the fluid in the substrate body.

In one embodiment, the fluid dispenser is positioned for dispensing the fluid through the upper face of the substrate body. If leaves limit the access to the upper face too much, the device may furthermore be provided with means for moving the plant parts relative to the substrate body in order to expose the upper face.

In an alternative embodiment, the fluid dispenser has been positioned for dispensing the fluid through a side face of the substrate body, in case of plant pot through the sidewall of the pot. Walls of nursery pots usually are rather thin and can easily be pierced by a perforating tool.

In an alternative embodiment, the fluid dispenser has been positioned for dispensing the fluid through the lower face of the substrate body, in case of a plant pot through the bottom wall of the pot, or in case of a sowing tray through bottom of the tray. This can be done through the wall material itself, similar to the sidewall, or through holes that have often been provided in bottom walls of pots.

Which direction of introduction is preferable, may depend on the type of plant, its growth stage and its root system, as well as the type of substrate body. In high pots, it may for instance be desirable to pass through the sidewall, as introduction from above would lengthen the insertion path to such an extent that it would require too much time.

In one embodiment, the fluid dispenser has been positioned for introducing the fluid into the substrate body according to a direction, which direction is at a positive, in particular acute angle to the horizontal. The fluid dispenser can then be arranged on the frame with adjustment means for setting the angle. In that way plant type and growth stage can be attuned to.

In case of introduction via the upper face, the angle may exceed 45 degrees, for instance in the range of 60-80 degrees relative to the horizontal.

In case of introduction via the side face or the pot side wall the angle may be less than 45 degrees, in particular less than 20 degrees, in particular approximately 10 degrees.

In one embodiment, the fluid dispenser has been arranged so as to be adjustable in height.

The process of urging the dose of fluid into the substrate body is enhanced if the fluid dispenser comprises an injection device.

The injection device can be an injector, which comprises an injector needle having a distal end, wherein the injector comprises means for moving the distal end of the needle to inside of the substrate body and retracting said distal end free from the substrate body.

In particular, in the aforementioned case of introduction through the pot wall or tray wall, the needle can have a sharp distal end for piercing the pot wall.

The needle may be closed at the distal end surface which is oriented towards the substrate, in order prevent clogging during penetration, wherein near said end surface the needle has been provided with obliquely or radially oriented discharge openings.

The device according to the invention comprises a conveyor for conveying the one or more substrate bodies provided with a plant to and/or from the position station, in particular a conveyor, such as a belt conveyor, conveying through the position station. For positioning one or more substrate bodies provided with a plant at the position station, the device may have been provided with one or more stoppers that can be brought in and out of the path on the conveyor of the one or more substrate bodies provided with a plant. The stoppers can be retractable in a direction having a directional component that is parallel to the direction of removal of the substrate bodies from the position station. Retraction of the stoppers can then coincide with continuing conveyance, so that speed is can be gained.

In the aforementioned case of two fluid dispensers positioned on two opposite sides, they are positioned on both sides of the conveyor. They may be oriented in respective vertical planes that are transverse to the conveyance direction of the conveyor at the location of the position station. Alternatively, they may have been arranged for introduction into the substrate body according to respective directions that each have a horizontal directional component coinciding with the conveyance direction of the conveyor at the location of the position station, in particular also a horizontal directional component that is transverse to the conveyance direction. Because the fluid dispensers, in particular the injectors, as a result extend, to a higher or lesser degree, in the conveyance direction of the substrate body, it is possible to have the retraction of the fluid dispensers coincide with the conveyance of the treated substrate body away from the position station, thus gaining speed and capacity.

The purpose of the fluid dispenser may first of all be dispensing water, having a dynamic viscosity in the order of 1 mPa.s at 20 degrees C. The source of fluid will then be filled with water. This may be a reservoir or a conduit connected to the water supply system, in particular when using a hydrophore to increase the pressure, for instance to 3-4 bar.

Alternatively, or additionally, in view of increasing the water absorption capacity and/or extended availability of water in the substrate body, a pumpable hydro gel, in particular liquid hydro gel, can be introduced into the substrate body to be treated. It is known to mix hydro gel grains with the substrate, in particular potting compost. This is laborious, especially for plant pots that have to be transported, as the substrate will then have to be replaced and when doing so the plants may moreover get damaged. According to the invention the device can be used for administering pumpable hydro gel. In one embodiment said pump is also a means to reduce the viscosity of the hydro gel, resulting in being conducive to the pumpability and the hydro gel behaving more like a liquid.

In one embodiment, the device comprises a device for fluid having fluid dispensers for the pumpable hydro gel and for the water, wherein the fluid dispensers can selectively be brought in fluid connection with the source of hydro gel and with the water source.

In an alternative embodiment, the device comprises a first device for fluid having fluid dispensers for water and a second device for fluid having fluid dispensers for hydro gel.

In both embodiments, fluid dispensers are positioned at opposite sides of the position station. In that way for instance first a dose of water can be introduced from the one side, and subsequently a dose of hydro gel from the other side.

It is also possible to provide a position station at both of said devices for fluid. In case of said conveyor, the fluid dispensers of the one device for fluid, preferably the first device for fluid, when considered in conveyance direction of the conveyor, can then be placed upstream of the fluid dispensers of the other device for fluid, preferably the second device for fluid. This double fashion design is also advantageous, as the first and the second device for fluid have two fluid dispensers positioned on both sides of the conveyor.

The fluid dispensers may have been designed in a multiple fashion, for treating several substrate bodies simultaneously, such as in the case of the trays with plant pots or the sowing trays.

In one embodiment, the device has been provided with a control unit for controlling the device(s) for fluid, the conveyor, if any, the stoppers, if any, for the substrate bodies, etcetera. The control unit may have been provided with means for setting the dose of fluid to be dispensed. The control unit may have been provided with means for determining the actually dispensed quantity of fluid.

According to a further aspect, the invention provides a method for administering a fluid to one or more substrate bodies provided with a plant rooted therein, according to independent claim 11.

The dose can easily be determined, attuned to the plant and to the substrate body.

The dose of fluid is dispensed from an injector needle which, from a position situated external of the substrate body, with the needle end is urged to inside the substrate body and after dispensing the dose of fluid is retracted from it again.

As discussed above, depending on what is best for the plant pots in question, the dose of fluid can be introduced through the upper face, through a side face, in particular the pot sidewall, or through the bottom face, in particular the tray bottom wall or the pot bottom wall.

The one or more substrate bodies are moved by a conveyor, such as a belt conveyor, to the position station and are moved away by it from there, preferably in a same conveyance direction.

The dose of fluid comprises a dose of pumpable, in particular liquid, hydro gel. A quantity of water as well as a quantity of hydro gel are dispensed. In one embodiment, prior to introducing the hydro gel, a dose of water is dispensed to the substrate body. The water introduced and the hydro gel introduced can form two supplies of moisture for the substrate body/the plant. The plant can first use the water and subsequently the moisture from the hydro gel. The dose of water may as it were pre-moisturize a dry substrate body, which may be advantageous to the effectiveness of the hydro gel.

In particular in the case of dispensing water, the dose dispensed can be monitored by a flow meter. In case a hydrophore is used, when detecting the wanted volume has flowed through, the conduit to the needle can be closed off with a valve controlled by the control unit.

The dose of water and the dose of hydro gel can be introduced into the substrate body from both sides of the position station. Alternatively, the water is introduced into the substrate body at the location of a first position station, and the hydro gel is introduced into the substrate body at the location of a second position station situated downstream therefrom in conveyance direction. The transportation time required for moving from the first position station to the second position station can be utilised here for the spreading of the water and/or the water taking effect on the substrate body.

In one embodiment, fluid is dispensed using at least two injector needles, which are urged into the substrate body according to directions having opposite directional components, wherein the two injector needles preferably are simultaneously inserted into the substrate body and preferably are simultaneously retracted therefrom. The two injector needles can be operational from both sides of the conveyor.

As observed before, the capacity can be enhanced if the injector needles are urged into the substrate body according to directions having a directional component in conveyance direction of the conveyor.

In one embodiment, the method is carried out for or the device is configured for treating plant pots, in one embodiment a series of plant pots to be handled individually. In another embodiment, the method according to the invention is carried out for or the device according to the invention is configured for treating a group of plant pots carried by a tray, for instance 3x2 plant pots, wherein each time a left-hand plant pot is accessible to a fluid dispenser on the one side of the position station and a right-hand plant pot is accessible to a fluid dispenser on the opposite side of the position station. In case of singular fluid dispensers, the tray can be moved one pot location onwards after each dispensing action. In case of a multiple arrangement of fluid dispensers, for instance 3 on each side, such a tray can be treated in one stroke.

In one embodiment, the method is carried out for or the device is configured for treating so-called pressed pots, pressed balls or cubes of substrate, in particular soil, into which a plant is rooted, without enveloping. In case they have a larger soil ball size, just like plant pots, they can be treated in series as individual items, or in case of a smaller soil ball, be supplied in groups to the at least one position station.

In one embodiment, the method is carried out for or the device is configured for treating groups of soil balls which each contain a plant rooted therein, which soil balls have been included in accommodation spaces of trays, such as so-called sowing trays.

### BRIEF DESCRIPTION OF THE DRAWINGS

The invention will be elucidated on the basis of a number of exemplary embodiments shown in the attached drawings, in which:
Figures 1A and 1B show an end view and a top view, respectively, of an example of a device according to the invention;
Figures 2A-C show a number of stages in the use of the device of figures 1A and 1B, in top view and in end view, respectively; and
Figure 3 shows a top view of a device according to the invention, that has been designed in a double fashion.

### DETAILED DESCRIPTION OF THE DRAWINGS

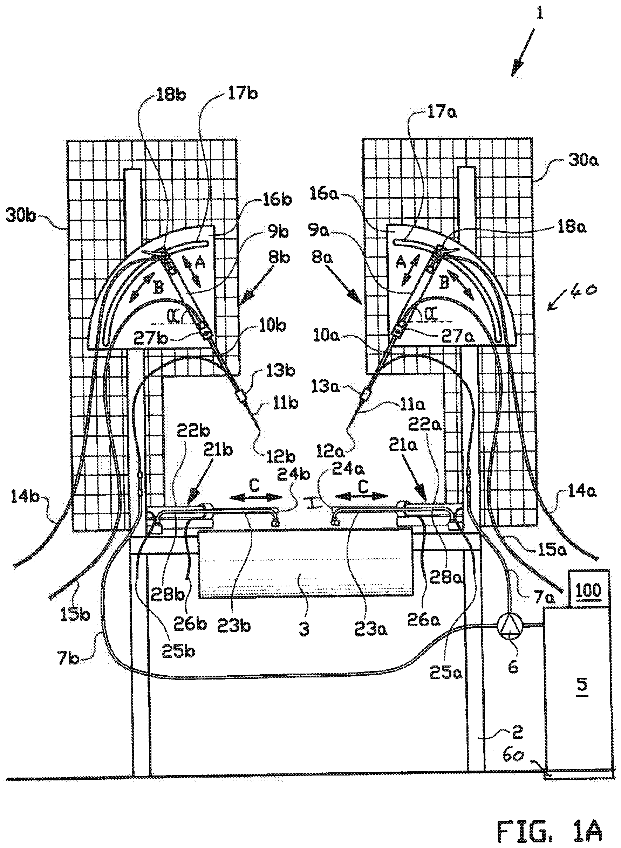

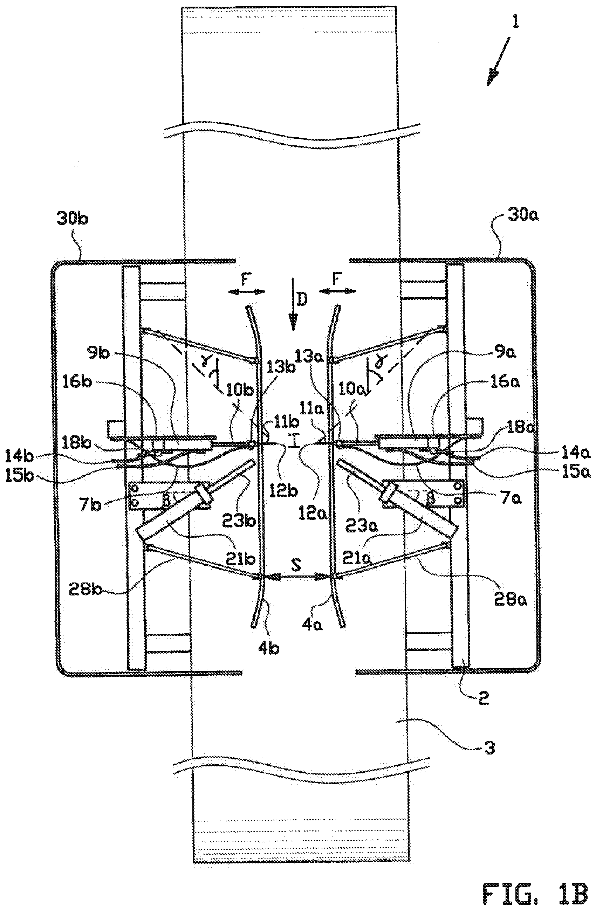

The device 1 in figures 1A and 1B comprises a frame 2 and a belt conveyor 3 extending through it, which conveyor is driven in the direction D. On both sides of the conveyance path thus formed, two screens 30a,b have been arranged on the frame 2. Within the screens 30a,b pot guides 4a,b have been arranged on both sides of the conveyance path, the guides being supported parallelogram-style by rods 28a,b, the angle of which being adjustable in the horizontal plane so that the pot guides 4a,b can be moved towards and away from each other in directions F, for setting the width of the passage S, attuned to the diameter of the plant pots to be treated, so that they are centred on the belt conveyor. Alternatively, instead of the guides 4a,b it is also possible to use a guide on a part of the conveyor 3 that is situated upstream, that can be adjusted in position transverse to the conveyor, against which guide the plant pots find abutment in a centred position on the belt conveyor.

Also positioned on both sides of the conveyance path are two pot stoppers 21a,b, the angle β of which can be set, for attuning to the pot size, and that each comprise a pneumatic cylinder 22a,b having a piston rod 23a,b that can be extended/retracted in directions C, and which are connected to a pressurised air source (not shown) via tubes 25a, 26a and 25b, 26b. The distal ends 24a,b of the piston rods 23a,b form stops for a plant pot.

At a higher level, two cylinders 9a,b have been arranged on both sides on the frame 2. They have been attached to vertical plates 16a,b which in top view have been placed at an angle (in this case of 90 degrees) to the conveyance direction D, which plates are optionally adjustable in terms of height location (see the vertical slots), and which have been provided with circle segment-shaped adjusting slots 17a,b for adjusting screws 18a,b. The adjusting screws 18a,b have been arranged at the outer ends of the pneumatic cylinders 9a,b, the other ends of which at the location of hinges 27a,b, have been attached to the plates 16a,b, as a result of which the cylinders 9a,b are able to rotate in directions B and can be adjusted in position at an acute angle α.

The cylinders 9a,b comprise the piston rods 10a,b that are extendable/retractable in directions A and have been connected to a pressurised air source (not shown) via tubes 14a,15a and 14b,15b. Fluid dispensers 8a,b have been attached to the distal ends of the piston rods 10a,b. They comprise needle holders 13a,b having hollow needles 11a,b with closed, sharp distal ends 12a,b, wherein close (for instance 1 cm) behind the closed end surface a number of discharge holes that are oriented sidewards, have been provided in the circumferential wall of the needle. Via tubes 7a,b, the needle holders 13a,b have been connected to a pump 6, for instance, in particular for hydro gel, a peristaltic pump or a membrane pump, for pumping, pressing fluid coming from a reservoir 5 kept at overpressure, through tubes 7a,b to the needles 11a,b, so that a dose of liquid under the pressure can be discharged out of them.

In the figure the needles 11a,b can be moved back and forth in a vertical plane that is transverse to the conveyance direction D. In another embodiment, the needles can be moved back and forth in vertical planes that are at an (acute) angle γ to the conveyance direction D, as schematically shown in figure 1B.

Below the cylinder 9a or 9b a photocell (not shown) is positioned in the bottom area of the pots, which is oriented in transverse direction to detect the presence of a plant pot.

The pneumatic operation of the cylinders 9a,b and 22a,b and the operation of the belt 3 is driven from a central, programmable control unit 100. In there the control can be adjusted to the pot height and the pot diameter, as well as the desired stroke length of the needles 11a,b. The angles α and β, as well as the distance S, can be set manually. In one embodiment said angle γ can be set, for instance by rotation about a vertical hinge line of the plates on which the cylinders 9a,b have been arranged.

Furthermore, the central, programmable control unit 100 drives the pump 6, and the size of the dose of fluid to be dispensed can be entered in there.

The cylinders 9a,b and their operation means, the fluid dispensers 8a,b, the pump 6 and the supply 5 are part of the device for fluid 40, in this case provided with two fluid dispensers for the same fluid.

In operation, the plant pots P that are almost entirely filled with a substrate body L, in this example potting compost body L in which a plant V is rooted, are supplied one after the other on the belt conveyor 3 in direction D. Prior to that, the central control unit 100 has been adjusted to the plant pots in question and the wanted treatment.

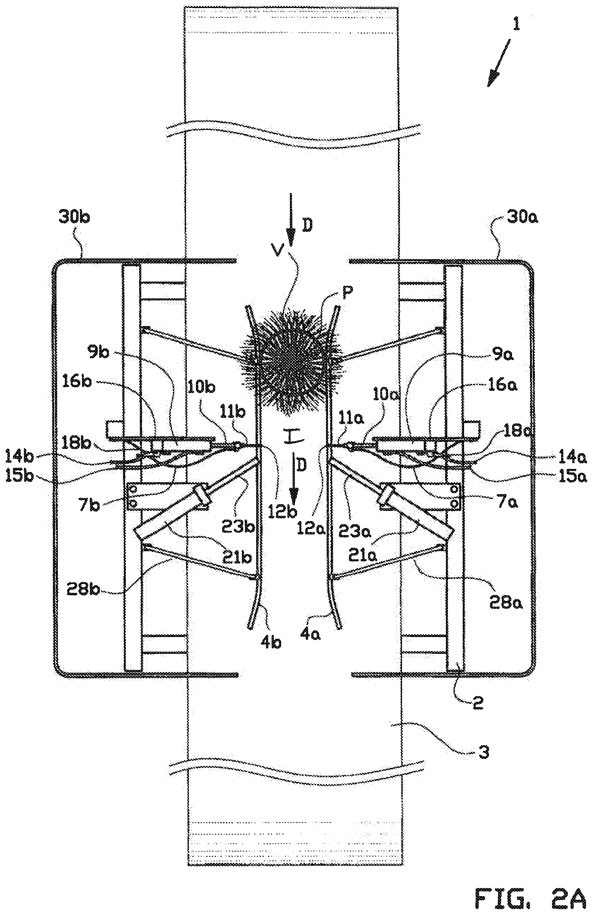

In figure 2A the plant pot P has arrived between the guides 4a,b. The piston rods 23a,b have been extended for by means of the pot stops 24a,b keeping the plant pot P centred relative to the fluid dispensers 8a,b at the position station I on the belt 3.

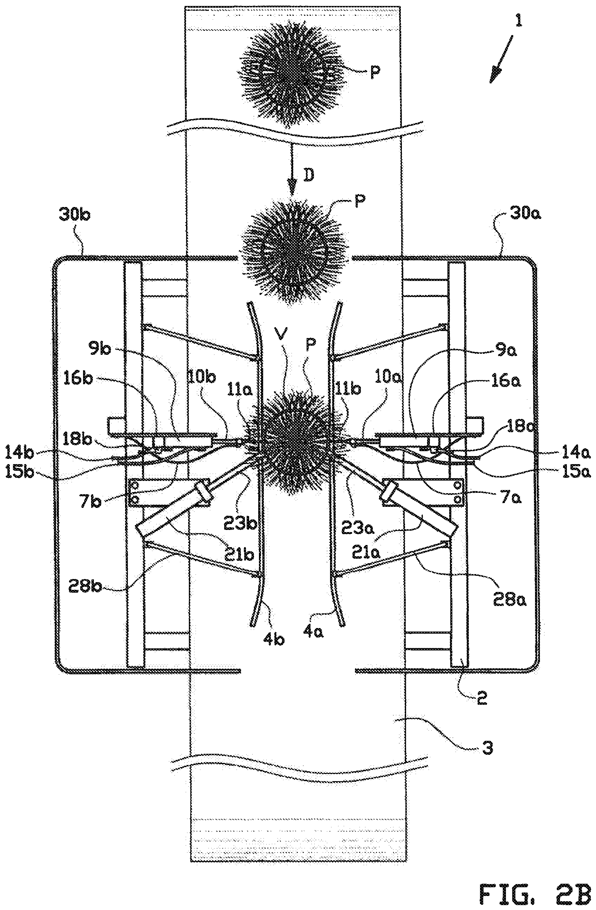

In figure 2B the plant pot P has ended up against the stops 24a,b and is situated at the position station I. The photocell has detected the plant pot P. If the pots have rough bottoms the setting may such that based on said detection, the control unit 100 stops the belt 3. This will not be required if the bottoms of the pots are smooth. Based on the detection by the photo cell, the control unit 100 ensures actuation of the cylinders 9a,b to extend the needles 11a,b and penetrate the potting compost body L via its upper face, down to for instance 1/3 of the height of the potting compost body below said upper face. The depth to which the needle ends 12a,b are brought depends on among others the root structure and the type of plant, as well as the further plans regarding the potted plant in question, such as the duration of the periods of storage, transportation and sale and the conditions during those periods.

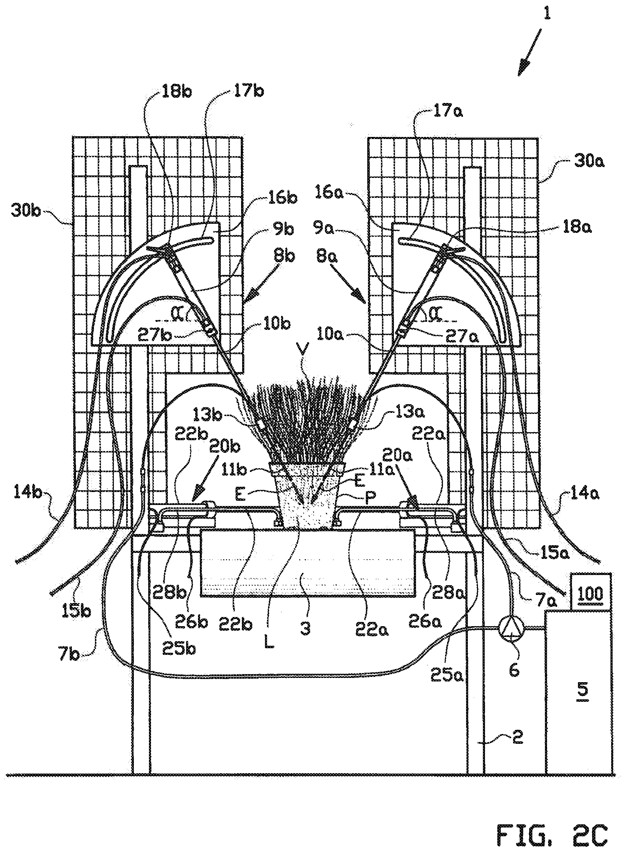

As soon as the needle ends 12a,b have been taken to the correct place, the control unit 100 activates the pump 6, as a result of which the set dose of fluid is pumped, pressed, to the needles 11a,b via conduits 7a,b, and is injected out of the needle ends 12a,b into the potting compost body L, see figure 2C. Immediately after having dispensed the dose the cylinders 9a,b are operated to retract the needles 11a,b again so that the needle ends 12a,b are free from the plant pot P, including plant V. Prior to that, the cylinders 22a,b are operated to bring the stops 24a,b out of the conveyance path of the plant pot P. If the conveyor belt has stopped, the stops may already have been retracted before that.

As needles penetrate the potting compost body from opposite sides and are also retracted from there, there may be question of a horizontal balance of forces in a vertical plane transverse to the conveyance direction D. Furthermore, this enhances the spreading of the fluid in the potting compost body. When inserting the needles from both sides the plant pot, when considered in transverse direction, will be able to remain in its place.

If the needles have been set in advance at a said angle γ, they extend in the direction D with a directional component, as are result of which it may be advantageous to already continue conveyance in the direction D while retracting the needles.

The plant pot P is conveyed onwards by conveyor 3 in direction D, to a location of placing it on a trolley, for transportation to a location of storage or sale. The cylinders 23a,b are operated again immediately after passage of the plant pot P to form a stop for a next plant pot P.

Supply of plant pots P can be controlled, so that upon release of a plant pot treated with fluid a next plant pot P arrives within the guides 4a,b.

The fluid that may be dispensed in this example, for instance is a low viscosity liquid, such as water, for instance in a dose of 2x 75 ml in 1 second, for 1 litre of potting compost. In that case the pump 6 can be simple, such as a plunger pump.

The device can be made suitable for dispensing a specific dose of hydro gel from the needle ends 12a,b. The gel has been made/kept sufficiently streamable, in particular liquid for pumping, pressing to and dispensing from the needles 11a,b. The pump, such as a peristaltic pump, can then be used for reducing the viscosity, as a result of a kneading action on the gel. Influencing the viscosity of the hydro gel by influencing its temperature is another option. After a day of using the device, the conduits between pump and needles can be rinsed with water (not shown) in order to clear those conduits from hydro gel. The next day the pump will fill the conduits with hydro gel again, which will then have been made less viscous by the pump. The hydro gel remains properly pumpable in periods of changing the plant pot. The dose of hydro gel may for instance be 2x 17 ml for one litre of potting compost.

For controlling the quantity of hydro gel dispensed, the device according to the invention can be provided with a weighing device, with which the weight of the content of hydro gel in the reservoir can be monitored, and on the basis of which the dispensing can be controlled: the predetermined dose is then related to its dose weight in the reservoir, and when the measured weight of the stored mass in the reservoir has decreased by the dose weight, dispensing is stopped. By way of example a weighing device 60 has been schematically depicted in figure 1A. It provides data regarding the weight of the reservoir 5 to the control unit 100.

The hydro gel may be wanted if timed-release of doses of water to the roots is required and evaporation from the potting compost body has to be kept within limits as much as possible. In that way the plants may last through a longer period in storage, transport and sale.

It is possible that only a hydro gel is introduced. It is also possible to introduce water as well as hydro gel.

Prior to introducing the dose of hydro gel, water can be introduced into the substrate body, which is then (pre)moisturized with it, which is particularly advantageous if the substrate is relatively dry. In a first period the plant can then use the introduced water and in a second period the water contained in the hydro gel. The first and second period may partially overlap each other.

Dispensing water and hydro gel may, in an exemplary embodiment, take place using the same device, wherein in addition to a first reservoir for water a second reservoir, for the hydro gel, has been connected to the pump 6, and both reservoirs, via valves operated by the control unit, can selectively be brought in fluid connection with the pump 6. The plant pot P is then twice subjected to an administration of fluid, at the same position station I, first for water, then for hydro gel, each time from both sides. Parts of the device, in particular the conduits, pump, discharge holes, can then be suitable for dispensing water as well as hydro gel. It is also possible to provide a pump for each reservoir, and providing valves between the injector needles and both pumps for bringing the injector needles in fluid connection with the one pump/reservoir and with the other pump/reservoir.

The consecutive administration of water and hydro gel can alternatively take place using the one dispenser 8a for water and shortly after that using the other dispenser 8b for hydro gel.

Alternatively, it is possible to have two sets of fluid dispensers in one and the same device, for instance a set of needles, such as needles 11a,b, for administering water, inserted from above, and a set of needles that are piercing the pot wall from the side and, subsequent to the dispensing of water, dispense hydro gel in the potting compost body L. In order to prevent gel from running back out of the tunnel the needles have made in the potting compost body, said needles may be inserted downwardly inclined, for instance at an angle of 10 degrees to the horizontal. In this case a separate pump for the hydro gel can be provided.

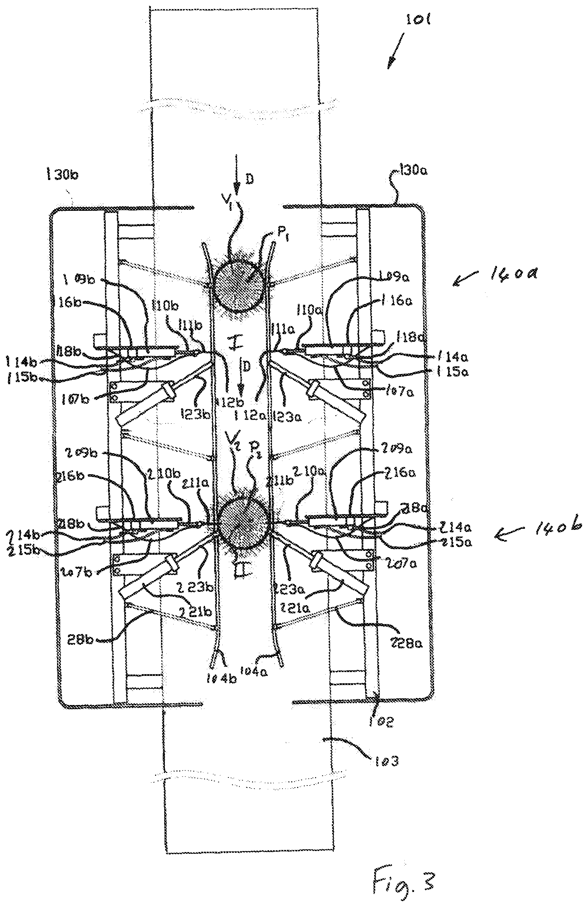

Alternatively, a double fashion arrangement of two similar devices for fluid according to the invention can be opted for, with first a device for dispensing water and directlydownstream therefrom a device for fluid for dispensing hydro gel. In that case, each device for fluid can be more specifically suited to the fluid in question. This is schematically shown in figure 3, with device 101 comprising the device for fluid 140a for dispensing water to a potted plant P1 at a position station I and a device for fluid 140b for dispensing hydro gel to a potted plant P2 at position station II. In figure 3 similar parts have been provided with identical numbers increased by 100 (water) and 200 (hydro gel), respectively. Both devices for fluid are driven by a joint, programmable control device, with which the other parts, such as conveyor belt 103, can also be controlled.

In general, the needles of the fluid dispensers can be positioned for penetration of the substrate body via its upper face, alternatively via its side face or the pot sidewall or alternatively via its bottom wall, optionally via holes, if any, in the bottom wall. In the latter case the belt conveyor can be configured with a slit space below the pot bottom wall for at the location of the position station providing room for moving the needles up and down. If it is desired to dispense the fluid via said bottom holes, detection means, such as a sensor or a camera, may be present for detecting the position of a hole and means can be present for rotating the plant pot for bringing said hole in line with the path of the fluid dispenser.

If so desired the cylinders 9a,b and the pump 6 can be controlled such that fluid is dispensed in steps or gradually at several depths in the substrate body. For instance the needle ends 12a,b can first be inserted at a largest depth, and subsequently be retracted while dispensing the fluid in steps or continuously.

In case of a plant having leaves covering the upper face, the device according to the invention can be provided with a means for temporarily moving said leaves out of the way and keeping them out of the way so that a free target surface at the upper face is provided to the fluid dispensers.

Instead of plant pots that can be handled individually, plant pots supplied in groups on or in trays can also be treated. In case of for instance a tray with 2x3 plant pots, with two pots adjacent to each other in transverse direction, of each pair of pots the right-hand pot can be treated by fluid dispenser 8a and the left-hand pot by fluid dispenser 8b. The tray can then be treated in three steps. In that case, use can for instance be made of three pairs of stoppers that are operational at a distance of one pot pitch from each other, consecutively, controlled by the control unit.

The disclosure is not limited to the embodiments discussed in the description and shown in the drawings. The above description is included to illustrate the operation of preferred embodiments. Starting from the above explanation many variations that fall within the scope of the present disclosure will be evident to an expert. Variations of the parts described in the description and shown in the drawings, are possible. They can be used individually in other embodiments. Parts of the various examples given can be combined with each other. The scope of the invention is limited by the appended claims.

## Claims

1. Device (1) for administering a fluid, in particular a hydro gel, to one or more substrate bodies provided with a plant, comprising
- a frame (2);
- at least one position station, provided on the frame, for one or more substrate bodies provided with a plant rooted therein, wherein the substrate body has an upper face, and
- at least one device for fluid (40), placed at the position station, for urging the fluid into the substrate body, up to one or several places below the upper face of the substrate body,
- wherein the device for fluid (40) comprises at least two fluid dispensers (8), at least one source of fluid and a conduit for fluid situated in between the fluid dispensers and the at least one source of fluid, as well as pressure means for supplying a dose of fluid under pressure to the fluid dispensers, wherein the device for fluid (40) comprises two fluid dispensers (8) positioned on opposite sides of the position station, the device (1) further comprises a conveyor (3) for conveying the one or more substrate bodies provided with a plant to and/or from the position station, in particular the conveyor (3), such as a belt conveyor (3), conveying through the position station, wherein said fluid dispensers (8) have been positioned on either side of the conveyor (3), and preferably have been arranged for introduction into the substrate body according to directions having opposite directional components.

2. Device according to claim 1, wherein the fluid dispenser (8) has been positioned for dispensing the fluid through the upper face of the substrate body.

3. Device according to claim 1 or 2, wherein each fluid dispenser (8) comprises an injection device, wherein the injection device is an injector, which comprises an injector needle (11) having a distal end, wherein the injector comprises means for moving the distal end of the needle (11) to inside of the substrate body and retracting said distal end free from the substrate body, wherein the needle (11) is closed at the distal end face which is oriented towards the substrate, wherein near said end face the needle (11) has been provided with obliquely or radially oriented discharge openings.

4. Device according to claim 1, 2 or 3, wherein at least one fluid dispenser (8) has been oriented in a vertical plane that is transverse to the conveyance direction of the conveyor (3) at the location of the position station.

5. Device according to claim 1, 2 or 3, wherein at least one fluid dispenser (8) has been arranged for introduction into the substrate body according to a direction having a horizontal directional component coinciding with the conveyance direction of the conveyor (3) at the location of the position station, in particular also having a horizontal directional component that is transverse to the conveyance direction.

6. Device according to any one of the claims 1-5, comprising a source filled with water and a source filled with a pumpable hydro gel, wherein the device for fluid (40) has fluid dispensers (8) for hydro gel and for water, wherein the fluid dispensers (8) can selectively be brought in fluid connection with the source of the hydro gel and with the water source.

7. Device according to any one of the claims 1-5, comprising a source filled with water and a source filled with a pumpable hydro gel, and comprising a fluid dispenser (8) for the hydro gel and a fluid dispenser (8) for water.

8. Device according to claim 7, comprising a first device for fluid (40) having at least one fluid dispenser (8) for water and a second device for fluid (40) having at least one fluid dispenser (8) for hydro gel, wherein a position station may have been provided at each device for fluid (40), wherein the fluid dispenser of the one device for fluid, preferably the first, when considered in conveyance direction of the conveyor (3), has been placed upstream of the fluid dispenser of the other device for fluid, preferably the second, wherein, preferably, the first and/or the second device for fluid have two fluid dispensers positioned on either side of the conveyor (3).

9. Device according to claim 8, wherein both said first and second devices (40) have fluid dispensers (8) which are situated on either side of the position station.

10. Device according to any one of the preceding claims, wherein the device (1) has been provided with one or more stoppers (21) that can be brought in and out of the path on the conveyor (3) of the one or more substrate bodies provided with a plant, for positioning the one or more substrate bodies provided with a plant at the position station, wherein, preferably the stoppers (21) are retractable in a direction having a directional component that is parallel to the direction of removal of the substrate bodies from the position station.

11. Method for administering a fluid to one or more substrate bodies provided with a plant rooted therein, wherein the substrate body has an upper face,
wherein a substrate body is placed on a position station,
after which the fluid, in a predetermined dose, is dispensed under pressure to the substrate body at one or several places below the upper face of the substrate body;
after which the substrate body is removed from the position station,
wherein the dose of fluid is dispensed from an injector needle (11) which, from a position situated external of the substrate body, with the needle end is urged to inside the substrate body and after dispensing the dose of fluid is retracted from it again,wherein the substrate body is moved by a conveyor (3), such as a belt conveyor (3), to the position station and is moved away by it from there, preferably in a same conveyance direction, **characterised in that** the dose of fluid comprises a dose of hydro gel or water, wherein both a dose of hydro gel and a dose of water is dispensed, in particular dispensing water prior to dispensing the hydro gel to the substrate body,
wherein at the location of a first position station the water is introduced into the substrate body and at the location of a second position station situated downstream therefrom in conveyance direction, the dose of hydro gel is introduced into the substrate body.

12. Method according to claim 11, wherein the dose of water and/or the dose of hydro gel are introduced into the substrate body from both sides of the position station.

13. Method according to claim 11 or 12, wherein the fluid is dispensed using at least two injector needles (11), which two injector needles are urged into the substrate body according to directions having opposite directional components, wherein the two injector needles (11) preferably are inserted simultaneously into and preferably are retracted simultaneously from the substrate body, wherein, preferably, the two injector needles (11) are operational from both sides of the conveyor (3).

14. Method according to claim 11, 12 or 13, wherein the injector needles (11) are urged into the substrate body according to directions having a directional component in conveyance direction of the conveyor (3).

15. Method according to any one of the claims 11-14, wherein the dose of fluid is introduced through the upper face or wherein the dose of fluid is introduced through the bottom side of the substrate body, in case of a plant pot through the bottom wall of the pot.

16. Method according to any one of the claims 11-15, wherein
- plant pots are being treated, or
- wherein a series of plant pots to be handled individually are being treated, or
- wherein a group of plant pots carried by a tray are being treated, or
- wherein so-called pressed pots, pressed soil balls and/or cubes of substrate, in particular soil, in which a plant is rooted, without enveloping, are being treated, or wherein groups of pressed pots are being treated, or
- wherein groups of soil balls/cubes which each contain a plant rooted therein, are being treated, which balls are present in the accommodation spaces of trays, such as so-called sowing trays.

## Patentansprüche

1. Vorrichtung (1)
zur Verabreichung einer Flüssigkeit, insbesondere eines Hydrogels, an einen oder mehrere Substratkörper, die mit einer Pflanze versehen sind, umfassend
- einen Rahmen (2);
- mindestens eine Positionsstation, die auf dem Rahmen vorgesehen ist, für einen oder mehrere Substratkörper, die mit einer darin verwurzelten Pflanze versehen sind, wobei der Substratkörper eine Oberseite aufweist, und
- mindestens eine an der Positionsstation platzierte Vorrichtung für Flüssigkeit (40), um die Flüssigkeit in den Substratkörper bis zu einer oder mehreren Stellen unter der Oberseite des Substratkörpers zu drängen,
- wobei die Vorrichtung für Flüssigkeit (40) mindestens zwei Flüssigkeitsspender (8), mindestens eine Flüssigkeitsquelle und ein Rohr für Flüssigkeit, das sich zwischen den Flüssigkeitsspendern und der mindestens einen Quelle für Flüssigkeit befindet, umfasst, als auch Druckmittel, um eine Flüssigkeitsdosis unter Druck zu den Flüssigkeitsspendern zu liefern,
wobei die Vorrichtung für Flüssigkeit (40) zwei Flüssigkeitsspender (8) umfasst, die auf entgegengesetzten Seiten der Positionsstation positioniert sind,
wobei die Vorrichtung (1) ferner ein Fördermittel (3)umfasst,
um den einen oder die mehreren Substratkörper, die mit einer Pflanze versehen sind, zu und/oder von der Positionsstation, insbesondere dem Fördermittel (3) wie zum Beispiel einem Transportband (3), zu fördern, das durch die Positionsstation transportiert, wobei die Flüssigkeitsspender (8) auf beiden Seiten des Förderbands (3) positioniert worden sind und vorzugsweise zur Einführung in den Substratkörper entsprechend Richtungen angeordnet worden sind, die entgegengesetzte Richtungskomponenten aufweisen.

2. Vorrichtung nach Anspruch 1, wobei der Flüssigkeitsspender (8) zum Spenden der Flüssigkeit durch die Oberseite des Substratkörpers positioniert worden ist.

3. Vorrichtung nach Anspruch 1 oder 2, wobei jeder Flüssigkeitsspender (8) eine Injektionsvorrichtung umfasst, wobei die Injektionsvorrichtung ein Injektor ist, der eine Injektornadel (11) umfasst, die ein distales Ende aufweist, wobei der Injektor Mittel zum Bewegen des distalen Endes der Nadel (11) zum Inneren des Substratkörpers und Zurückziehen des distalen Endes aus dem Substratkörper heraus aufweist,
wobei die Nadel (11) an der distalen Stirnseite geschlossen ist, die auf das Substrat zu orientiert ist, wobei die Nadel (11) nahe der Stirnseite mit schräg oder radial orientierten Ablauföffnungen versehen ist.

4. Vorrichtung nach Anspruch 1, 2 oder 3, wobei mindestens ein Flüssigkeitsspender (8) in einer vertikalen Ebene orientiert worden ist, die quer zur Förderrichtung des Förderbands (3) an der Stelle der Positionsstation ist.

5. Vorrichtung nach Anspruch 1, 2 oder 3, wobei mindestens ein Flüssigkeitsspender (8) zur Einführung in den Substratkörper entsprechend einer Richtung angeordnet ist, die eine horizontale Richtungskomponente aufweist, die mit der Förderrichtung des Förderbands (3) an der Stelle der Positionsstation zusammenfällt, und insbesondere ebenfalls eine horizontale Richtungskomponente aufweist, die quer zur Förderrichtung ist.

6. Vorrichtung nach einem der Ansprüche 1 - 5, umfassend eine mit Wasser gefüllte Quelle und eine mit einem pumpbaren Hydrogel gefüllte Quelle,
wobei die Vorrichtung für Flüssigkeit (40) Flüssigkeitsspender (8) für Hydrogel und für Wasser aufweist, wobei die Flüssigkeitsspender (8) selektiv strömungstechnisch in Verbindung mit der Quelle des Hydrogels und mit der Wasserquelle gebracht werden können.

7. Vorrichtung nach einem der Ansprüche 1 - 5, umfassend eine mit Wasser gefüllte Quelle und eine mit einem pumpbaren Hydrogel gefüllte Quelle, und umfassend einen Flüssigkeitsspender (8) für das Hydrogel und einen Flüssigkeitsspender (8) für Wasser.

8. Vorrichtung nach Anspruch 7, umfassend eine erste Vorrichtung für Flüssigkeit (40), die mindestens einen Flüssigkeitsspender (8) für Wasser hat, und eine zweite Vorrichtung für Flüssigkeit (40), die mindestens einen Flüssigkeitsspender (8) für Hydrogel hat, wobei eine Positionsstation an jeder Vorrichtung für Flüssigkeit (40) vorgesehen worden sein kann,
wobei der Flüssigkeitsspender der einen Vorrichtung für Flüssigkeit, vorzugsweise der ersten, in Förderrichtung des Förderbands (3) gesehen, dem Flüssigkeitsspender der anderen Vorrichtung für Flüssigkeit, vorzugsweise der zweiten, vorgelagert platziert worden ist, wobei vorzugsweise die erste und/oder die zweite Vorrichtung für Flüssigkeit zwei Flüssigkeitsspender haben, die auf beiden Seiten des Förderbands (3) positioniert sind.

9. Vorrichtung nach Anspruch 8, wobei sowohl erste als auch zweite, Vorrichtung (40) Flüssigkeitsspender (8) aufweisen, die sich auf beiden Seiten der Positionsstation befinden.

10. Vorrichtung nach einem der vorstehenden Ansprüche, wobei die Vorrichtung (1) mit einem oder mehreren Stopper (21) versehen ist, die in und aus der Bahn des Förderbands (3) des einen oder der mehreren Substratkörper die mit einer Pflanze versehen sind gebracht werden können, um den einen oder die mehreren Substratkörper, die mit einer Pflanze versehen sind, an der Positionsstation zu positionieren, wobei vorzugsweise der Stopper (21) in einer Richtung rückziehbar sind, die eine Richtungskomponente aufweist, die parallel zur Richtung der Entfernung der Substratkörper aus der Positionsstation ist.

11. Verfahren zum Verabreichen einer Flüssigkeit an einen oder mehrere Substratkörper, die mit einer darin verwurzelten Pflanze versehen sind, wobei der Substratkörper eine Oberseite hat,
wobei ein Substratkörper an einer Positionsstation platziert wird,
wonach die Flüssigkeit in einer vorgegebenen Dosis unter Druck an den Substratkörper an einer oder mehreren Stellen unter der Oberseite des Substratkörpers gespendet wird;
wonach der Substratkörper aus der Positionsstation entfernt wird,
wobei die Dosis der Flüssigkeit aus einer Injektornadel (11) gespendet wird, die aus einer Position, die sich extern zum Substratkörper befindet, mit dem Nadelende ins Innere des Substratkörpers gedrängt wird, und nach Spenden der Flüssigkeitsdosis aus ihm wieder zurückgezogen wird, wobei der Substratkörper durch ein Fördermittel (3) wie zum Beispiel ein Förderband (3), zur Positionsstation bewegt und von dort von ihm weg bewegt wird, vorzugsweise in einer selben Förderrichtung,
**dadurch gekennzeichnet, dass** die Flüssigkeitsdosis eine Dosis von Hydrogel oder Wasser umfasst,
wobei sowohl eine Hydrogeldosis als auch eine Wasserdosis gespendet werden, wobei insbesondere Wasser gespendet wird, ehe das Hydrogel an den Substratkörper gespendet wird,
wobei an der Stelle einer ersten Positionsstation das Wasser in den Substratkörper eingeführt wird und an der Stelle einer zweiten Positionsstation, die dazu in Förderrichtung nachgelagert ist, die Dosis des Hydrogels in den Substratkörper eingeführt wird.

12. Verfahren nach Anspruch 11, wobei die Wasserdosis und/oder die Hydrogeldosis in den Substratkörper von beiden Seiten der Positionsstation aus eingeführt werden.

13. Verfahren nach Anspruch 11 oder 12, wobei die Flüssigkeit unter Anwendung von mindestens zwei Injektornadeln (11) gespendet wird,
welche zwei Injektornadeln in den Substratkörper entsprechend Richtungen gedrängt wird, die entgegengesetzte Richtungskomponenten aufweisen, wobei die zwei Injektornadeln (11) vorzugsweise gleichzeitig in den Substratkörper eingeführt und gleichzeitig aus ihm zurückgezogen werden, wobei vorzugsweise die zwei Injektornadeln (11) von beiden Seiten des Förderbands (3) aus einsatzfähig sind.

14. Verfahren nach Anspruch 11, 12 oder 13, wobei die Injektornadeln (11) in den Substratkörper entsprechend Richtungen gedrängt werden, die eine Richtungskomponente in Förderrichtung des Förderbands (3) aufweisen.

15. Verfahren nach einem der Ansprüche 11 - 14, wobei die Flüssigkeitsdosis durch die Oberseite eingeführt wird, oder wobei die Flüssigkeitsdosis durch die Unterseite des Substratkörpers, im Fall eines Pflanzentopfs durch den Boden des Topfes, eingeführt wird.

16. Verfahren nach einem der Ansprüche 11 - 15, wobei
- Pflanzentöpfe behandelt werden oder
- wobei eine Reihe von zu behandelnden Pflanzentöpfen individuell behandelt werden, oder
- wobei eine Gruppe von Pflanzentöpfen, die von einer Schale getragen werden, behandelt werden oder
- wobei sogenannte gepresste Töpfe, gepresste Erdballen und/oder -würfel von Substrat, insbesondere Erde, in denen eine Pflanze verwurzelt ist, ohne Umhüllung behandelt werden oder wobei Gruppen von gepressten Töpfen behandelt werden oder
- wobei Gruppen von Erdballen/-würfeln, die jeweils eine darin verwurzelte Pflanze enthalten, behandelt werden, wobei diese Ballen in den Aufnahmeräumen von Trays, wie zum Beispiel den sogenannten Anzuchtschalen, vorhanden sind.

## Revendications

1. Dispositif (1) pour administrer un fluide, en particulier un hydrogel, à un ou plusieurs corps de substrat garni(s) d'une plante, comprenant
- un cadre (2);
- au moins une station de positionnement, prévue sur le cadre, pour un ou plusieurs corps de substrat garni(s) d'une plante enracinée dans celui-ci/ceux-ci, dans lequel le corps de substrat présente une face supérieure, et
- au moins un dispositif fluidique (40) qui est placé au niveau de la station de positionnement afin de pousser le fluide dans le corps de substrat jusqu'à un ou plusieurs endroit(s) situé(s) en dessous de la face supérieure du corps de substrat,
dans lequel le dispositif fluidique (40) comprend au moins deux distributeurs de fluide (8), au moins une source de fluide et un conduit de fluide qui est situé entre les distributeurs de fluide et ladite au moins une source de fluide, ainsi que des moyens de pression pour fournir une dose de fluide sous pression aux distributeurs de fluide,
dans lequel le dispositif fluidique (40) comprend deux distributeurs de fluide (8) qui sont positionnés sur des côtés opposés de la station de positionnement, le dispositif (1) comprenant en outre un transporteur (3) pour transporter ledit/lesdits un ou plusieurs corps de substrat garni(s) d'une plante jusqu'à et/ou à partir de la station de positionnement, en particulier le transporteur (3), tel qu'une bande transporteuse (3), exécute le transport à travers la station de positionnement, dans lequel lesdits distributeurs de fluide (8) ont été positionnés de part et d'autre du transporteur (3), et ont de préférence été agencés de manière à être introduits dans le corps de substrat en suivant des directions qui présentent des composantes directionnelles opposées.

2. Dispositif selon la revendication 1, dans lequel le distributeur de fluide (8) a été positionné de manière à distribuer le fluide à travers la face supérieure du corps de substrat.

3. Dispositif selon la revendication 1 ou 2, dans lequel chaque distributeur de fluide (8) comprend un dispositif d'injection, dans lequel le dispositif d'injection est un injecteur, qui comprend une aiguille d'injection (11) qui présente une extrémité distale, dans lequel l'injecteur comprend des moyens pour déplacer l'extrémité distale de l'aiguille (11) jusqu'à l'intérieur du corps de substrat et pour rétracter ladite extrémité distale librement hors du corps de substrat, dans lequel l'aiguille (11) est fermée au niveau de la face d'extrémité distale qui est orientée en direction du substrat, dans lequel des ouvertures de décharges orientées en oblique ou de façon radiale ont été prévues à proximité de ladite face d'extrémité de l'aiguille (11).

4. Dispositif selon la revendication 1, 2 ou 3, dans lequel au moins un distributeur de fluide (8) a été orienté dans un plan vertical qui est transversal à la direction de transport du transporteur (3) à l'endroit de la station de positionnement.

5. Dispositif selon la revendication 1, 2, ou 3, dans lequel ledit au moins un distributeur de fluide (8) a été agencé de manière à réaliser une introduction dans le corps de substrat en suivant une direction qui présente une composante directionnelle horizontale qui coïncide avec la direction de transport du transporteur (3) à l'endroit de la station de positionnement, en particulier qui présente également une composante directionnelle horizontale qui est transversale à la direction de transport.

6. Dispositif selon l'une quelconque des revendications 1 à 5, comprenant une source remplie d'eau et une source remplie d'un hydrogel pompable, dans lequel le dispositif fluidique (40) comprend des distributeurs de fluide (8) pour l'hydrogel et pour l'eau, dans lequel les distributeurs de fluide (8) peuvent être amenés de façon sélective en connexion fluidique avec la source d'hydrogel et avec la source d'eau.

7. Dispositif selon l'une quelconque des revendications 1 à 5, comprenant une source remplie d'eau et une source remplie d'un hydrogel pompable, et comprenant un distributeur de fluide (8) pour l'hydrogel et un distributeur de fluide (8) pour l'eau.

8. Dispositif selon la revendication 7, comprenant un premier dispositif fluidique (40) qui comprend au moins un distributeur de fluide (8) pour l'eau, et un second dispositif fluidique (40) qui comprend au moins un distributeur de fluide (8) pour l'hydrogel, dans lequel une station de positionnement peut avoir été prévue au niveau de chaque dispositif fluidique (40), dans lequel le distributeur de fluide dudit un dispositif fluidique, de préférence le premier, lorsqu'ils sont considérés dans la direction de transport du transporteur (3), a été placé en amont du distributeur de fluide de l'autre dispositif fluidique, de préférence le second, dans lequel, de préférence, le premier et/ou le second dispositif(s) fluidique(s) comprend/comprennent deux distributeurs de fluide qui sont positionnés de part et d'autre du transporteur (3) .

9. Dispositif selon la revendication 8, dans lequel ledit premier et ledit second dispositifs (40) comprennent tous les deux des distributeurs de fluide (8) qui sont situés de part et d'autre de la station de positionnement.

10. Dispositif selon l'une quelconque des revendications précédentes, dans lequel le dispositif (1) a été pourvu d'un ou de plusieurs arrêt(s) (21) qui peut/peuvent être amené (s) dans et hors du chemin du transporteur (3) dudit/desdits un ou plusieurs corps de substrat garni(s) d'une plante, afin de positionner ledit/lesdits un ou plusieurs corps de substrat garni(s) d'une plante au niveau de la station de positionnement, dans lequel, de préférence, les arrêts (21) sont rétractables dans une direction qui présente une composante directionnelle qui est parallèle à la direction d'enlèvement des corps de substrat hors de la station de positionnement.

11. Procédé pour administrer un fluide à un ou plusieurs corps de substrat garni(s) d'une plante enracinée dans celui-ci/ceux-ci,
dans lequel le corps de substrat présente une face supérieure,
dans lequel un corps de substrat est placé sur une station de positionnement,
après quoi le fluide, en une dose prédéterminée, est distribué sous pression au corps de substrat à un ou plusieurs endroit(s) qui est/sont situé(s) en dessous de la face supérieure du corps de substrat;
après quoi le corps de substrat est enlevé de la station de positionnement,
dans lequel la dose de fluide est distribuée à partir d'une aiguille d'injection (11) qui, à partir d'une position qui est située à l'extérieur du corps de substrat, avec l'extrémité de l'aiguille, est poussée jusqu'à l'intérieur du corps de substrat et qui, après la distribution de la dose de fluide est à nouveau rétractée hors de celui-ci,
dans lequel le corps de substrat est déplacé par un transporteur (3), tel qu'une bande transporteuse (3), jusqu'à la station de positionnement, et est déplacé par celui-ci à l'écart de celle-ci, de préférence dans une même direction de transport,
**caractérisé en ce que** la dose de fluide comprend une dose d'hydrogel ou d'eau,
dans lequel à la fois une dose d'hydrogel et une dose d'eau sont distribuées, en particulier en distribuant l'eau avant de distribuer l'hydrogel au corps de substrat,
dans lequel, à l'endroit d'une première station de positionnement, de l'eau est introduite dans le corps de substrat, et à l'endroit d'une seconde station de positionnement qui est située en aval de celle-ci dans la direction de transport, la dose d'hydrogel est introduite dans le corps de substrat.

12. Procédé selon la revendication 11, dans lequel la dose d'eau et/ou la dose d'hydrogel est/sont introduite(s) dans le corps de substrat à partir des deux côtés de la station de positionnement.

13. Procédé selon la revendication 11 ou 12, dans lequel le fluide est distribué en utilisant au moins deux aiguilles d'injection (11), lesdites deux aiguilles d'injection étant poussées dans le corps de substrat en suivant des directions qui présentent des composantes directionnelles opposées, dans lequel les deux aiguilles d'injection (11) sont de préférence insérées simultanément dans le et sont de préférence rétractées simultanément hors du corps de substrat, dans lequel, de préférence, les deux aiguilles d'injection (11) sont opérationnelles à partir des deux côtés du transporteur (3).

14. Procédé selon la revendication 11, 12 ou 13, dans lequel les aiguilles d'injection (11) sont poussées dans le corps du substrat en suivant des directions qui présentent une composante directionnelle dans la direction de transport du transporteur (3).

15. Procédé selon l'une quelconque des revendications 11 à 14, dans lequel la dose de fluide est introduite à travers la face supérieure, ou dans lequel la dose de fluide est introduite à travers le côté inférieur du corps de substrat, dans le cas d'un pot à plante à travers la paroi inférieure du pot.

16. Procédé selon l'une quelconque des revendications 11 à 15, dans lequel
- des pots à plante sont traités, ou
- dans lequel une série de pots à plante à manipuler individuellement sont traités, ou
- dans lequel un groupe de pots à plante portés par un plateau sont traités, ou
- dans lequel ce que l'on appelle des pots comprimés, des billes de terre comprimées et/ou des cubes de substrat comprimés, en particulier de terre, dans lesquel(le)s une plante est enracinée, sans enveloppement, sont traité(e)s, ou dans lequel des groupes de pots comprimés sont traités, ou
- dans lequel des groupes de billes/cubes de terre qui contiennent chacun(e) une plante enracinée dans ceux-ci/celles-ci, sont traités, lesdites billes étant présentes dans les espaces de réception de plateaux, tels que ceux que l'on appelle des plateaux pour ensemencement.
